# EUROPÄISCHE PATENTSCHRIFT

(11) **EP 0 944 942 B1**
(45) Veröffentlichungstag und Bekanntmachung des Hinweises auf die Patenterteilung: **27.03.2002**
(21) Anmeldenummer: 97954700.7
(22) Anmeldetag: 12.12.1997
(51) Int. Cl.: H02B 13/035

(54) **ERKENNUNGSEINRICHTUNG FÜR ANSCHLUSSKONTAKTE VON SCHALTFELDERN**
RECOGNITION DEVICE FOR CONNECTING CONTACTS ON SWITCH PANELS
DISPOSITIF DE RECONNAISSANCE POUR LES CONTACTS DE CONNEXION DES PANNEAUX D'INTERRUPTEURS

(30) Priorität: 13.12.1996 DE 19653683
(43) Veröffentlichungstag der Anmeldung: 29.09.1999
(73) Patentinhaber: SIEMENS AKTIENGESELLSCHAFT, 80333 München (DE)
(72) Erfinder: POTH, Rainer, D-61118 Bad Vilbel (DE); WENGE, Brunhilde, D-39167 Eichenbarleben (DE)
(86) Internationale Anmeldenummer: DE9702936
(87) Internationale Veröffentlichungsnummer: WO9826483

(56) Entgegenhaltungen:
- EP-A- 0 122 595
- DE-A- 3 433 362
- US-A- 3 966 297
- US-A- 4 234 006
- PATENT ABSTRACTS OF JAPAN vol. 16, no. 240 (E-1211), 3. Juni 1992 & JP 04 049802 A (MEIDENSHA CORP.), 19. Februar 1992

## Beschreibung

Die Erfindung betrifft ein- oder mehrpolige, metallgekapselte, geschottete oder gasisolierte Schaltfelder einer Schaltanlage, die mittels Dreistellungsschalter mit Trenner- und Erderfunktion mit oder ohne Vakuumschaltröhren ausgebildeten Leistungsschaltern in Verbindung stehen, die jeweils in Sammelschienen-Gehäusen oder getrennten Trenner-Gehäusen angeordnet sind, und die mit Übertragungseinrichtungen zur visuellen Aufnahme von Festkontakten ausgestattet sind.

Übertragungseinrichtungen für derart definierte Schaltfelder sind in Form von Endoskopgeräten aus der DE-U-296 08 127 bekannt. Die Endoskopiegeräte werden hier direkt durch Führungsrohre an die Sichtfenster der Schaltfelder geführt, um die sich hinter diesen Sichtfenstern angeordneten Kontaktstellen betrachten zu können. Die Führungsrohre der Schaltfelder sind in vorteilhafter Weise von der Frontseite her aus zugänglich, so daß das Bedienungspersonal die Endoskopiegeräte von der Bedienungsseite der Schaltfelder aus direkt handhaben können.
Die Endoskopiegeräte sind in ihrem freien Endbereich mit einer Optiklinse ausgestattet und weisen zusätzlich eine Lichtquelle auf, so daß die in den Gehäusen der Schaltfelder angeordneten Kontaktbereiche mittels dieser Endoskopiegeräte betrachtet werden können. Allerdings ist es dabei notwendig, die Endoskopiegeräte so zu positionieren, daß sowohl der Bildausschnitt als auch die Bildhelligkeit ausreichen, um die Kontaktstellen mit genügender Sicherheit begutachten zu können.

Desweiteren ist aus der DE 34 33 362 A1 eine Überwachungseinrichtung mit an Sichtfenstern angeordneten Sensoren zur visuellen Erfassung von Kontaktstellen bekannt, die auf Leuchterscheinungen eines Störlichtbogens im Innern des Gasraumes ansprechen und durch geeignete Schaltmaßnahmen das Auslösen einer Schutzeinrichtung steuern. Mit dieser Überwachungseinrichtung lassen sich jedoch keine Kontakte abbilden.

Aus der EP 0 122 595 ist eine gasiolierte Schaltanlage bekannt, die zur Betrachtung der Kontakte innerhalb derselben Glasfaserkabel vorsieht.
Die Glasfasern selbst sind frontal zu den Kontakten angeordnet und werden durch gegenüberliegende Beleuchtungsfenster erhellt. Eine Begutachtung von einzelnen Kontaktstellen ist allerding damit nicht möglich.

Aus dem Patent Abstract of Japan, JP 04 049 802 A, ist außerdem bekannt, mehrere in einer Ebene liegende Bedingungseinrichtungen außerhalb einer Schaltanlage von einem gemeinsamen Kameramodul aus abzulesen.

Die der Erfindung zugrundeliegende Aufgabe besteht darin, eine Übertragungseinrichtung zur visuellen Aufnahme der Festkontakte in den Gehäusen der Schaltfelder zu definieren, deren Handhabung wesentlich vereinfacht ist und deren konstruktive Aufwendungen, insbesondere innerhalb der Schaltfelder, erheblich reduziert ist. Erfindungsgemäß wird dies durch die Merkmale
1.1 die Übertragungseinrichtung enthält ein Kameramodul, das über eine Anschlußeinrichtung mit einer Anzeigeeinrichtung verbindbar ist,
1.2 das Kameramodul ist derart außen am Gehäuse der Schaltfelder positioniert, daß die zu betrachtenden Festkontakte als kompakter Bildausschnitt sichtbar sind,
1.3 die Übertragungseinrichtung enthält eine ebenfalls außen am Gehäuse angeordnete schaltbare Beleuchtungseinrichtung,
1.4 die Beleuchtungseinrichtung und das Kameramodul sind untereinander und derart versetzt zueinander angeordnet, daß der Bildausschnitt den Festkontakt in sämtlichen Schaltzuständen erkennbar wiedergibt, erreicht.

Mit dem Einsatz eines Kameramoduls, das an konstanter Stelle des jeweiligen Schaltfeldes zur Erfassung des günstigsten Bildausschnittes positioniert ist, sind keine gewöhnungsbedingten Handhabungen bei der Besichtigung der Festkontakte mehr erforderlich. Die feste Installation der Kameramodule gewährleistet darüber hinaus einen gleichartigen Bildausschnitt, der bei entsprechend günstiger Positionierung ohne zusätzliche Einstellungen eine optimale Abbildung der Festkontakte ermöglicht.
Als wesentlich für die Erfindung ist in diesem Zusammenhang außerdem anzusehen, daß unabhängig von dem Kameramodul eine schaltbare Beleuchtungseinrichtung vorgesehen ist. Mit der von dem Kameramodul unabhängigen Beleuchtungseinrichtung kann bei entsprechender Positionierung derselben stets eine blend- und spiegelfreie Abbildung der Festkontakte erfolgen. Die schaltbare Beleuchtungseinrichtung ermöglicht darüber hinaus noch zusätzliche Energieeinspareffekte, die sich, insbesondere im Falle der Energieversorgung durch transportable Akkumulatoren, als vorteilhaft herausstellen. Als besonders günstig ist in diesem Fall die Versorgung der Beleuchtungseinrichtung in Verbindung mit der Anzeigeeinrichtung durch eine von außen her handhabbare Anschlußeinrichtung anzusehen.

Gemäß einer vorteilhaften Ausgestaltung der Erfindung sind die Merkmale
2.1 die Lichtbündelung der Beleuchtungseinrichtung ist durch eine Halogenlampe mit integrierter Linse zur Lichtbündelung ausgestattet,
2.2 die optische Achse der Linse ist zur optischen Achse des Kameramoduls derart ausgerichtet, daß der Schnittpunkt beider Achsen annähernd im Mittenbereich der Festkontakte liegt, vorgesehen.

Damit ist sichergestellt, daß die Festkontakte für eine sichere Begutachtung auch mit energiesparenden Beleuchtungseinrichtungen ausreichend beleuchtet sind.

Eine weitere vorteilhafte Ausgestaltung der Erfindung sieht die Merkmale
3.1 das Kameramodul und die Beleuchtungseinrichtung sind jeder Phase der Schaltanlage separat zugeordnet,
3.2 die über die Anschlußeinrichtung verbindbare Anzeigeeinrichtung ist mehren Phasen der Schaltanlage gemeinsam zugeordnet, vor.

Dementsprechend kann eine einzige, nicht stationäre Anzeigeeinrichtung wahlweise mit jedem einzelnen Kameramodul der Schaltanlage verbunden werden. In diesem Zusammenhang ist es auch denkbar, unter Bereitstellung weiterer Anzeigeeinrichtungen mehrere Festkontakte eines Schaltfeldes gleichzeitig zu betrachten. In jedem Fall kann die Zuordnung der Anzeigeeinrichtungen zu den parallel zu beobachtenden Festkontakte einer Schaltanlage so erfolgen, daß sie den entsprechenden Erfordernissen angepaßt sind. So können beispielsweise bei einer festen Zuordnung der Anzeigeeinrichtungen zu den jeweiligen Kameramodulen die entsprechenden Anschlußeinrichtungen entfallen und durch eine feste Verbindung ersetzt sein.

Die Erfindung wird durch ein figürlich dargestelltes Ausführungsbeispiel in zwei Figuren näher erläutert, wobei die
- Figur 1: ein mehrpoliges, gasisoliertes Schaltfeld in schematischer Darstellung zeigt, in dem die Übertragungseinrichtungen in ihrer Lage innerhalb der Anlage dargestellt sind, während die
- Figur 2: eine besonders vorteilhafte Anordnung der Beleuchtungseinrichtung zu dem Kameramodul erkennen läßt.

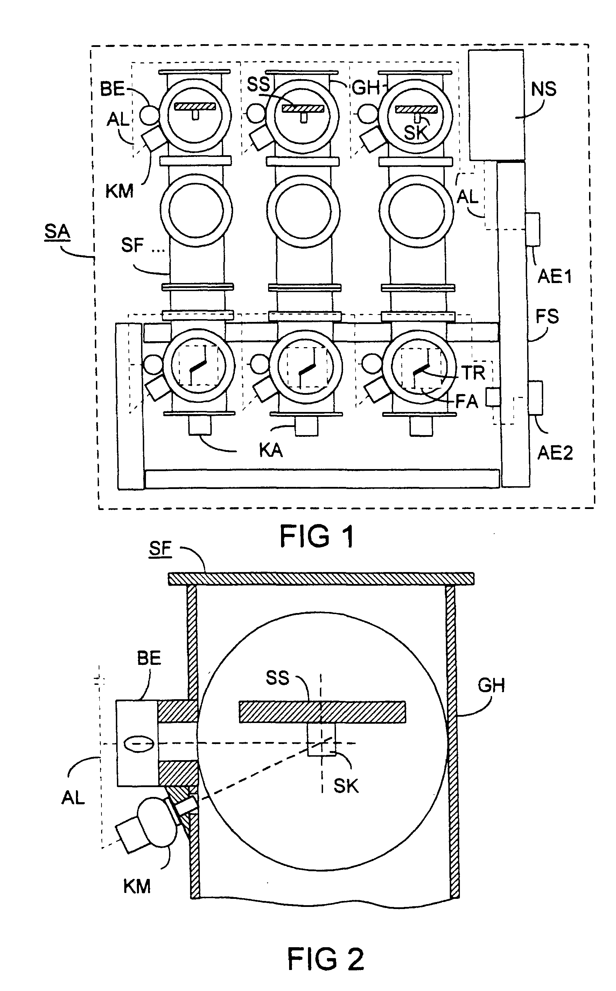

Die Figur 1 zeigt eine Schaltanlage SA, die mehrpolige, metallgekapselte gasisolierte Schaltfelder SF enthält. Im oberen Bereich des Schaltfeldes SF ist angedeutet, daß sich innerhalb des Gehäuses GH ein Sammelschienen-Festkontakt SK befindet, der mit Hilfe des Kameramoduls KM und der dazugehörigen Beleuchtungseinrichtung BE von außen her betrachtet werden kann. Außerdem ist durch die unterbrochene Linie angedeutet, daß das Kameramodul KM und die Beleuchtungseinrichtung BE durch die Anschlußleitung AL an den Niederspannungschrank NS geführt sind und von dort aus mit ihren Enden auf der entsprechenden Anschlußeinrichtung AE1, AE2 enden. Unterhalb der Sammelschienen SS befinden sich die Feldanschlüsse FA mit den jeweiligen Trennern TR, die in gleicher Weise wie der Sammelschienen-Anschlußkontakt SK von außen her durch das Kameramodul KM in Verbindung mit der Beleuchtungeinrichtung BE erkennbar gemacht werden können. Auch hier führt eine nicht bezeichnete Anschlußleitung auf die Anschlußeinrichtung AE2, die, wie die Anschlußeinrichtung AE1, an der Frontseite FS der Schaltanlage SA für das Bedienungspersonal zugänglich sind.

Die Figur 2 zeigt nähere Einzelheiten der Positionierung der Beleuchtungseinrichtung BE zu dem Kameramodul KM. Innerhalb des gasisolierten Schaltfeldes SF, das durch das Gehäuse GH gasdicht abgeschlossen ist, befindet sich die Sammelschiene SS mit ihrem Sammelschienen-Festkontakt SK. Die Beleuchtungseinrichtung BE ist am Schaltfeld SF des Gehäuses GH derart positioniert, daß das Licht direkt auf den Mittenbereich des Sammelschienen-Festkontaktes SK gerichtet ist. Weiterhin ist ersichtlich, daß das Kameramodul KM unterhalb der Beleuchtungseinrichtung BE am Schaltfeld SF angeordnet ist und mit seiner optischen Achse ebenfalls auf den Mittenbereich des Sammelschienen-Festkontakts SK gerichtet ist. In dieser Position der Beleuchtungseinrichtung BE zu dem Kameramodul KM ist in einfacher Weise der Bildausschnitt des Sammelschienen-Festkontakts SK darzustellen, der für das Bedienungspersonal zur Begutachtung des Kontaktzustands erforderlich ist. Mit dieser konstanten Anordnung des Kameramoduls KM mit der Beleuchtungseinrichtung BE an dem Gehäuse GH des Schaltfeldes SF ist stets ein konstanter Bildausschnitt wiedergegeben, ohne daß hierzu besondere Einstellmaßnahmen und besondere Positionierungen der Kameramodule KM zu den Beleuchtungseinrichtungen BE vorgenommen werden müssen.
Die Ausrichtung und Zuordnung der Beleuchtungseinrichtung BE und des Kameramoduls KM zu der Abbildung des Trenners TR des Feldanschlusses FA (Figur 1) erfolgt in vorteilhafterweise in der gleichen Art, wie bei dem Sammelschienen-Festkontakt SK.

## Patentansprüche

1. Ein- oder mehrpolige, metallgekapselte, geschottete oder gasisolierte Schaltfelder (SF) einer Schaltanlage (SA), die mittels Dreistellungsschalter mit Trenner- und Erderfunktion mit oder ohne Vakuumschaltröhren ausgebildeten Leistungsschaltern in Verbindung stehen, die jeweils in Sammelschienen-Gehäusen oder getrennten Trenner-Gehäusen angeordnet sind, und die mit Übertragungseinrichtungen zur visuellen Aufnahme von Festkontakten (SK) ausgestattet sind,
**gekennzeichnet durch** die Merkmale
1.1 die Übertragungseinrichtung enthält ein Kameramodul (KM), das über eine Anschlußeinrichtung (AE1, 2) mit einer Anzeigeeinrichtung verbindbar ist,
1.2 das Kameramodul (KM) ist derart außen am Gehäuse (GH) der Schaltfelder (SF) positioniert, daß die zu betrachtenden Festkontakte (SK) als kompakter Bildausschnitt sichtbar sind,
1.3 die Übertragungseinrichtung enthält eine ebenfalls außen am Gehäuse (GH) angeordnete schaltbare Beleuchtungseinrichtung (BE),
1.4 die Beleuchtungseinrichtung (BE) und das Kameramodul (KM) sind untereinander und derart versetzt zueinander angeordnet, daß der Bildausschnitt den Festkontakt (SK) in sämtlichen Schaltzuständen erkennbar wiedergibt.

2. Ein- oder mehrpolige, metallgekapselte, geschottete oder gasisolierte Schaltfelder einer Schaltanlage nach Patentanspruch 1,
**gekennzeichnet durch** die Merkmale
2.1 die Lichtbündelung der Beleuchtungseinrichtung (BE) ist **durch** eine Halogenlampe mit integrierter Linse zur Lichtbündelung ausgestattet,
2.2 die optische Achse der Linse ist zur optischen Achse des Kameramoduls (KM) derart ausgerichtet, daß der Schnittpunkt beider Achsen annähernd im Mittenbereich der Festkontakte (SK) liegt.

3. Ein- oder mehrpolige, metallgekapselte, geschottete oder gasisolierte Schaltfelder einer Schaltanlage nach Patentanspruch 1 und den Patentansprüchen 1 und 2,
**gekennzeichnet durch** die Merkmale
3.1 das Kameramodul (KM) und die Beleuchtungseinrichtung (BE) sind jeder Phase der Schaltanlage (SA) separat zugeordnet,
3.2 die über die Anschlußeinrichtung (AE1, 2) verbindbare Anzeigeeinrichtung ist mehren Phasen der Schaltanlage (SA) gemeinsam zugeordnet.

## Claims

1. Single-pole or multipole, metal-encapsulated, compartmentalized or gas-insulated switch panels (SF) in a switchgear assembly (SA), which are connected by means of three-position switches to circuit breakers which are designed with a disconnection and earthing function with or without vacuum interrupters and are each arranged in busbar enclosures or separate disconnector enclosures, and which are equipped with transmission devices for visual recording of fixed contacts (SK),
**characterized by** the following features:
1.1 the transmission device contains a camera module (KM) which can be connected via a connecting device (AE1, 2) to a display device,
1.2 the camera module (KM) is positioned externally on the enclosure (GH) of the switch panels (SF) in such a manner that the fixed contacts (SK) to be viewed can be seen as a compact image section,
1.3 the transmission device contains a switchable lighting device (BE), which is likewise arranged externally on the enclosure (BH), and
1.4 the lighting device (BE) and the camera module (KM) are arranged with respect to one another and offset with respect to one another in such a manner that the image section reproduces the fixed contact (SK) such that it can be recognized in all switching states.

2. Single-pole or multipole, metal-encapsulated, compartmentalized or gas-insulated switch panels of a switchgear assembly according to Patent Claim 1,
**characterized by** the following features:
2.1 the light focusing for the lighting device (BE) is equipped, by means of a halogen lamp, with an integrated lens for light focusing,
2.2 the optical axis of the lens is aligned with the optical axis of a camera module (KM) in such a manner that the intersection of the two axes occurs approximately in the central area of the fixed contacts (SK).

3. Single-pole or multipole, metal-encapsulated, compartmentalized or gas-insulated switch panels of a switchgear assembly according to Patent Claim 1 and Patent Claims 1 and 2,
**characterized by** the following features:
3.1 the camera module (KM) and the lighting device (BE) are separately associated with each phase of the switchgear assembly (SA), and
3.2 the display device, which can be connected via the connecting device (AE1, 2) is jointly associated with a number of phases of the switchgear assembly (SA).

## Revendications

1. Panneaux (SF) d'interrupteurs monopolaires ou multipolaires, à blindage métallique, cloisonné ou isolé par du gaz,d'une installation (SA) de commutation, qui sont reliés, au moyen d'interrupteurs à trois positions à fonction de coupure et de mise à la terre à des disjoncteurs, qui sont constitués avec ou sans tubes interrupteurs à vide, qui sont disposés respectivement dans des boîtiers à rails collecteurs ou dans des boîtiers séparateurs séparés et qui sont munis de dispositifs de transmission pour l'enregistrement visuel de contacts (SK) fixes, **caractérisés par** les caractéristiques :
1.1 le dispositif de transmission comporte un module (KM) d'appareil photographique, qui peut être relié à un dispositif d'affichage par un dispositif (AE1, 2) de raccordement ;
1.2 le module (KM) d'appareil photographique est mis en position à l'extérieur sur le boîtier (GH) des panneaux (SF) d'interrupteurs, de façon que les contacts (SK) fixes à considérer puissent être visibles sous la forme d'une partie d'image compacte ;
1.3 le dispositif de transmission comporte un dispositif (BE) d'éclairage pouvant être branché et disposé également à l'extérieur du boîtier (GH) ;
1.4 le dispositif (BE) d'éclairage et le module (KM) de caméra sont disposés entre eux et sont décalés l'un par rapport à l'autre de façon que la partie d'image reproduise d'une manière reconnaissable le contact (SK) fixe dans tous les états de commutation.

2. Panneaux d'interrupteurs monopolaires ou multipolaires, à blindage métallique, cloisonné ou isolé par du gaz, d'une installation de commutation suivant la revendication 1, **caractérisés par** les caractéristiques :
2.1 la focalisation de la lumière du dispositif (BE) d'éclairage est munie pour la focalisation de la lumière d'une lampe à halogène à lentille intégrée ;
2.2 l'axe optique de la lentille est dirigé par rapport à l'axe optique du module (KM) de l'appareil photographique, de façon que le point d'intersection des deux axes soit approximativement dans la zone médiane des contacts (SK) fixes.

3. Panneaux d'interrupteurs monopolaires ou multipolaires, à blindage métallique, cloisonné ou isolé par du gaz, d'une installation de commutation suivant les revendications 1 et 2, **caractérisés par** les caractéristiques :
3.1 le module (KM) d'appareil photographique et le dispositif (BE) d'éclairage sont associés séparément à chaque phase de l'installation (SA) de commutation ;
3.2 le dispositif d'affichage, qui peut être relié par le dispositif (AE1, 2) de raccordement, est associé conjointement à plusieurs phases de l'installation (SA) de commutation.
